# EUROPEAN PATENT SPECIFICATION

(11) **EP 3 955 109 B1**
(45) Date of publication and mention of the grant of the patent: **10.07.2024**
(21) Application number: 20786961.1
(22) Date of filing: 26.03.2020
(51) Int. Cl.: G06N 3/082, G06N 3/045, G06F 8/41, G06F 9/4401

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF ET PROCÉDÉ DE TRAITEMENT D'INFORMATIONS, ET PROGRAMME

(30) Priority: 09.04.2019 JP 2019074221
(43) Date of publication of application: 16.02.2022
(73) Proprietor: Sony Group Corporation, Tokyo 108-0075 (JP)
(72) Inventor: HO Hsingying, Tokyo 108-0075 (JP)
(74) Representative: MFG Patentanwälte Meyer-Wildhagen Meggle-Freund Gerhard PartG mbB
(86) International application number: PCT/JP2020/013571
(87) International publication number: WO 2020/209078

(56) References cited:
- JP-A- 2014 229 124
- JP-A- 2017 211 799
- JP-A- H05 197 705
- HWANG K: "ADVANCED PARALLEL PROCESSING WITH SUPERCOMPUTER ARCHITECTURES", PROCEEDINGS OF THE IEEE, IEEE. NEW YORK, US, vol. 75, no. 10, 1 October 1987 (1987-10-01), pages 1348 - 1379, XP000747774, ISSN: 0018-9219

## Description

### TECHNICAL FIELD

The present disclosure relates to an information processing apparatus, an information processing method, and a program, and more particularly, to an information processing apparatus, an information processing method, and a program that enable a multitasking structure to be easily constructed.

### BACKGROUND ART

Processing for simultaneously solving a plurality of tasks such as object recognition, human recognition, path planning, and motion planning is referred to as multitasking.

For this reason, it can be said that a human is always operating while achieving multitasking.

In constructing a program having a multitasking structure for causing a device such as a robot to achieve multitasking, it is possible to simply achieve the construction with a configuration in which a program having a required single-tasking structure is subjected to pipeline.

However, in a case where the multitasking is implemented by simply performing pipeline on a plurality of pieces of single tasking, the same or similar pieces of processing may be performed individually among the pieces of single tasking, and the same processing may be unnecessarily repeated by performing the pipeline even though it is sufficient that the processing is performed only once, and the processing load may increase.

Therefore, in recent years, a technology for constructing a processing structure for achieving single tasking using a neural network has been proposed (see Non-Patent Document 1).

Non-Patent Document 2 investigates advanced parallel processing techniques and innovative hardware/software architectures that can be applied to boost the performance of supercomputers. Critical issues on architectural choices, parallel languages, compiling techniques, resource management, concurrency control, programming environment, parallel algorithms, and performance enhancement methods are examined and the best answers are presented. We cover advanced processing techniques suitable for supercomputers, high-end mainframes, minisupers, and array processors. The coverage emphasizes vectorization, multitasking, multiprocessing, and distributed computing. In order to achieve these operation modes, parallel languages, smart compilers, synchronization mechanisms, load balancing methods, mapping parallel algorithms, operating system functions, application library, and multidiscipline interactions are investigated to ensure high performance. At the end, we assess the potentials of optical and neural technologies for developing future supercomputers.

### CITATION LIST

### NON-PATENT DOCUMENT

Non-Patent Document 1: Learning Transferable Architectures for Scalable Image Recognition
Non-Patent Document 2: Kai Hwang, "Advanced parallel processing with supercomputer architectures," in Proceedings of the IEEE, vol. 75, no. 10, pp. 1348-1379, Oct. 1987, doi: 10.1109/PROC.1987.13894.

### SUMMARY OF THE INVENTION

### PROBLEMS TO BE SOLVED BY THE INVENTION

However, although the processing amount is enormous even in the structure search for the single tasking of Non-Patent Document 1, when the similar structure search is applied to achieve multitasking, it is expected that collection, labeling, learning, evaluation, and the like of the learning data become more difficult.

As described above, the man-hours for constructing the multitasking structure is enormous as compared with that of the case where the man-hours for constructing the single-tasking structure is simply multiplied by the number of types of single tasks, and enormous time is required for the construction.

The present disclosure has been made in view of such a situation, and in particular, enables a multitasking structure to be easily constructed.

### SOLUTIONS TO PROBLEMS

According to a first aspect the present invention provides an information processing apparatus in accordance with independent claim 1. According to a second aspect the present invention provides an information processing method in accordance with independent claim 11. According to a third aspect the present invention provides a program in accordance with pseudo-dependent claim 12. Further aspects are set forth in the dependent claims, the drawings and the following description.

An information processing apparatus according to an aspect of the present disclosure is an information processing apparatus including an optimization unit that optimizes a multitasking structure on the basis of a structure of the multitasking structure that controls operation of a target device.

An information processing method and a program according to an aspect of the present disclosure correspond to the information processing apparatus.

In an aspect of the present disclosure, a multitasking structure is optimized on the basis of a structure of the multitasking structure that controls operation of a target device.

### BRIEF DESCRIPTION OF DRAWINGS

Fig. 1 is a diagram for explaining a multitasking structure achieved by pipeline of a single-tasking structure.
Fig. 2 is a diagram for explaining an example in which a parameter is shared among processing modules that execute similar processing.
Fig. 3 is a diagram for explaining an example of sharing a parameter between a processing module and a block that execute similar processing.
Fig. 4 is a diagram for explaining an example of sharing a processing module for executing similar processing between single-tasking structures.
Fig. 5 is a diagram for explaining a configuration example of an information system of the present disclosure.
Fig. 6 is a flowchart for explaining multitask execution processing by the information processing system of Fig. 5.
Fig. 7 is a diagram for explaining a configuration example of a multitasking structure generation unit in Fig. 5.
Fig. 8 is a diagram for explaining a configuration example of a structure search unit in Fig. 7.
Fig. 9 is a flowchart for explaining prototype structure search processing.
Fig. 10 is a flowchart for explaining input and output similarity comparison structure search processing in Fig. 9.
Fig. 11 is a diagram for explaining an example of pipeline by a plurality of processing modules.
Fig. 12 is a flowchart for explaining parameter similarity comparison structure search processing in Fig. 9.
Fig. 13 is a flowchart for explaining prototype structure search processing of Application Example 1.
Fig. 14 is a flowchart for explaining multitask execution processing of Application Example 2.
Fig. 15 is a flowchart for explaining multitask execution processing of Application Example 3.
Fig. 16 is a diagram for explaining a configuration example of a general-purpose personal computer.

### MODE FOR CARRYING OUT THE INVENTION

Preferred embodiments of the present disclosure will be described in detail below with reference to the accompanying drawings. Note that, in the present specification and the drawings, the same reference numerals are given to the constituent elements having substantially the same functional configuration, and redundant explanations are omitted.

Hereinafter, embodiments for carrying out the present technology will be described. The description will be given in the following order.
1. Outline of the present disclosure
2. Embodiment of present disclosure
3. Application Example 1
4. Application Example 2
5. Application Example 3
6. Example of executing by software

### <<1. Outline of the present disclosure>>

The present disclosure enables a multitasking structure to be easily constructed.

First, an outline of the present disclosure will be described.

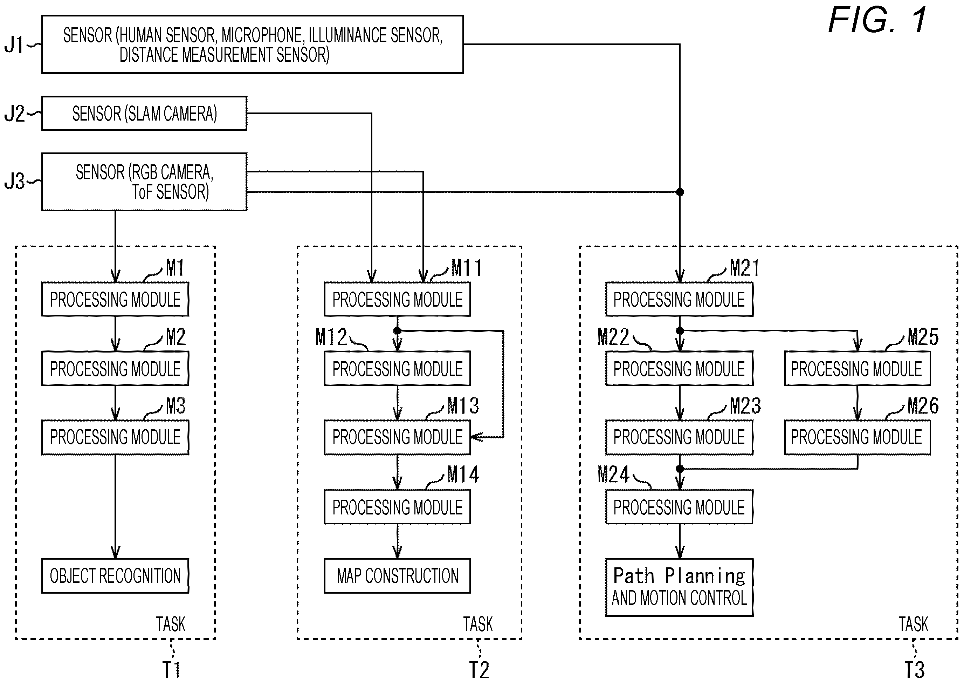

As illustrated in Fig. 1, a case where a moving object R including a robot or the like including three types of sensors J1 to J3 including a sensor J1 including a human sensor, a microphone, an illuminance sensor, a distance measurement sensor, or the like, a sensor J2 including a simultaneous localization and mapping (SLAM) camera, and a sensor J3 including a red green blue (RGB) camera, a time of flight (ToF) sensor, or the like is set as a target device will be described.

Furthermore, as illustrated in Fig. 1, a case will be considered in which a multitasking structure in which three types of existing single tasks T1 to T3 of object recognition, map construction, path planning, and motion control are simultaneously executed is constructed by a neural network, supplied to a target device including the moving object R, and multitasking is achieved by the moving object R.

Note that, hereinafter, the neural network is also simply referred to as an NN.

In Fig. 1, a processing structure of a single task T1 for achieving object processing includes, for example, processing modules M1 to M3 corresponding to a layer in the NN.

Here, the processing module M1 executes predetermined processing on the basis of the sensing result of the sensor J3, and outputs the execution result to the processing module M2.

The processing module M2 executes predetermined processing on the basis of the processing result of the processing module M1, and outputs the processing result to the processing module M3.

The processing module M3 executes predetermined processing on the basis of the processing result of the processing module M2, and outputs the processing result as an object recognition result.

As described above, the processing structure of the single task T1 related to the object recognition includes the processing modules M1 to M3, and the object recognition based on the sensing result of the sensor J3 is achieved by the single task T1.

Furthermore, the processing structure of the single task T2 for achieving map construction includes, for example, processing modules M11 to M14 corresponding to a layer in the NN.

Here, the processing module M11 executes predetermined processing on the basis of the sensing results of the sensors J2 and J3, and outputs the execution results to the processing modules M12, M13.

The processing module M12 executes predetermined processing on the basis of the processing result of the processing module M11, and outputs the processing result to the processing module M13.

The processing module M13 executes predetermined processing on the basis of the processing results of the processing modules M11, M12, and outputs the processing result to the processing module M14.

The processing module M14 executes predetermined processing on the basis of the processing result of the processing module M13, and outputs the processing result as a map construction result.

As described above, the processing structure of the single task T2 related to map construction includes the processing modules M11 to M14, and map construction is achieved by the single task T2 based on the sensing results of the sensors J2, J3.

Similarly, a processing structure of the single task T3 for achieving path planning (movement path planning) and motion control includes, for example, processing modules M21 to M26 corresponding to a Layer in the NN.

Here, the processing module M21 executes predetermined processing on the basis of the sensing results of the sensors J1 and J3, and outputs the execution results to the processing modules M22, M25.

The processing module M22 executes predetermined processing on the basis of the processing result of the processing module M21, and outputs the processing result to the processing module M23.

The processing module M23 executes predetermined processing on the basis of the processing result of the processing module M22, and outputs the processing result to the processing module M24.

The processing module M25 executes predetermined processing on the basis of the processing result of the processing module M21, and outputs the processing result to the processing module M26.

The processing module M26 executes predetermined processing on the basis of the processing result of the processing module M25, and outputs the processing result to the processing module M24.

The processing module M24 executes predetermined processing on the basis of the processing results of the processing modules M23, M26, and outputs a processing result as path planning and motion control result.

As described above, the processing structure of the single task T3 related to path planning and motion control includes the processing modules M21 to M26, and path planning and motion control are performed by the single task T3 based on the sensing results of the sensors J1, J3.

The single tasks T1 to T3 used by the existing hardware in Fig. 1 are subjected to pipeline, so that multitasking is achieved.

However, since the single tasks T1 to T3 are used by different pieces of existing hardware, optimization between included processing modules is not performed.

Therefore, for example, in a case where there is a processing module that executes similar processing or a block including a plurality of processing modules that executes similar processing among the processing modules M1 to M3, M11 to M14, and M21 to M26, there is a possibility that unnecessary overhead of memory copy occurs or a processing time increases due to repetition of overlapping processing.

Therefore, in the present disclosure, a prototype structure of the multitasking structure is constructed using an existing single-tasking structure, the prototype structure is searched for, the structure of the processing module and the block of the processing module is analyzed, and the processing module and the block to be subjected to the overlapping processing are optimized by sharing the processing module and the block, sharing the parameter corresponding to the Hyper Parameter used in the NN, coupling or decoupling the processing module and the block, and the like, and the highly efficient multitasking structure can be easily constructed.

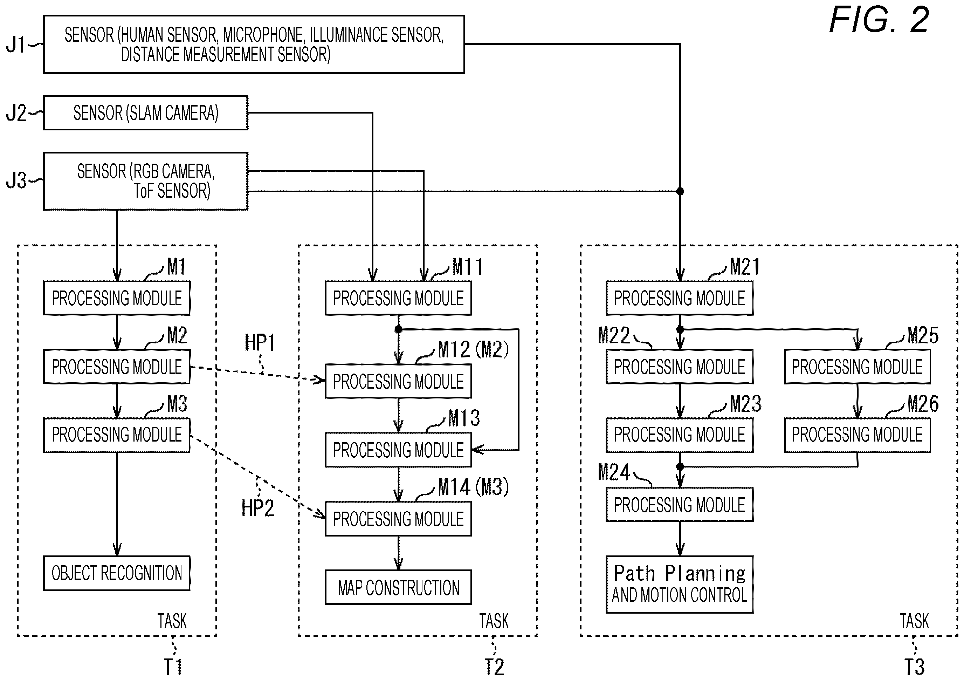

That is, more specifically, for example, in a case where the processing module M2 in the single task T1 and the processing module M12 in the single task T2 in Fig. 1 are processing modules that execute similar processing or the same processing, as illustrated in Fig. 2, the processing module M12 is treated as the processing module M2, and a parameter HP1 to be used is shared by the processing modules M2, M12 (M2).

Furthermore, in a case where the processing module M3 in the single task T1 and the processing module M14 in the single task T2 in Fig. 1 are processing modules that execute similar processing or the same processing, as illustrated in Fig. 2, the processing module M14 is treated as the processing module M3, and a parameter HP2 to be used is shared by the processing modules M3, M14 (M3).

By sharing the parameter among other similar processing modules, it is possible to reduce unnecessary overhead of memory copy and reduce consumption of the memory itself, and it is possible to reduce the processing time by reducing the use frequency of the memory.

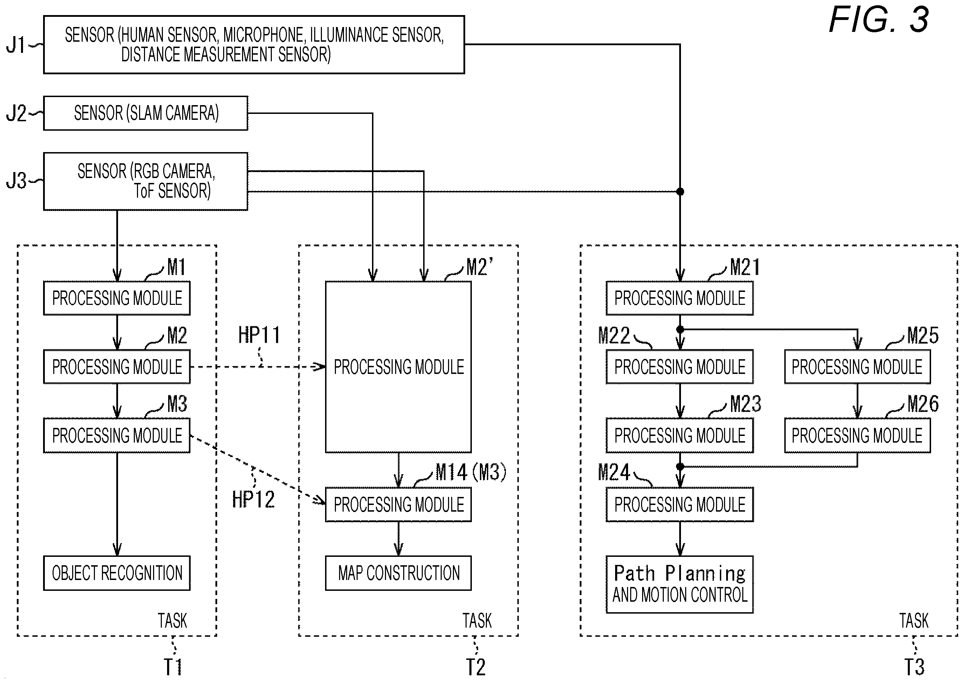

Furthermore, for example, in a case where the processing module M2 in the single task T1 and the block including the processing modules M11 to M13 in the single task T2 in Fig. 1 are similar to each other or are a processing module and a block that execute the same processing, as illustrated in Fig. 3, the processing modules M11 to M13 are coupled to be treated as a processing module M2', and moreover, a parameter HP11 to be used is shared.

Furthermore, in a case where the processing module M3 in the single task T1 and the processing module M14 in the single task T2 in Fig. 1 are processing modules that execute similar processing or the same processing, as illustrated in Fig. 3, the processing module M14 is treated as the processing module M3, and a parameter HP12 to be used is shared by the processing modules M3, M14 (M3).

As described above, in a case where there is a processing module that achieve similar processing to or the same processing as that of a block including a plurality of processing modules, the plurality of processing modules included in the block is coupled and treated as one processing module, and moreover, a parameter is shared among the processing modules that achieve similar processing.

Therefore, it is possible to reduce unnecessary overhead of memory copy and reduce consumption of the memory itself, and moreover, it is possible to reduce the processing time by reducing the use frequency of the memory.

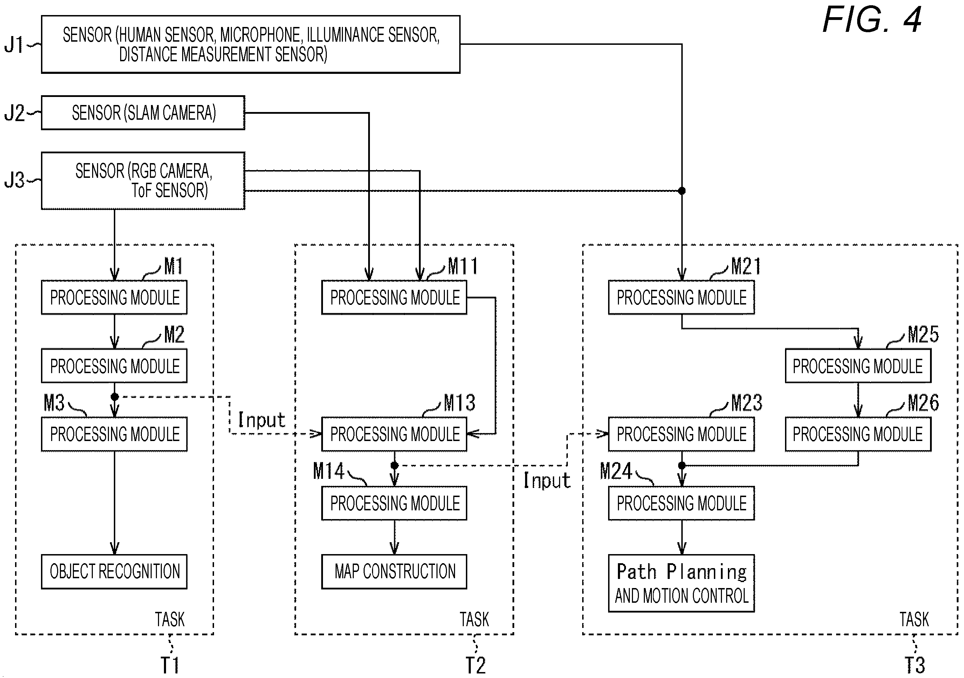

Moreover, for example, in a case where the processing module M2 in the single task T1 and the processing module M12 in the single task T2 in Fig. 1 are processing modules that execute the same processing, as illustrated in Fig. 4, the processing module M12 is shared with the processing module M2, and in the processing module M13, the output result of the processing module M2 is used (input) as it is.

Furthermore, in a case where the processing module M13 in the single task T2 and the processing module M22 in the single task T3 in Fig. 1 are processing modules that execute the same processing, as illustrated in Fig. 4, the processing module M13 is shared with the processing module M22, and in the processing module M23, the output result of the processing module M13 is used (input) as it is.

In a case where there is a processing module that achieves the same processing as described above, the processing module that achieves the same processing is shared and used, and the processing result of the shared processing module is used as it is in the subsequent processing.

Therefore, it is possible to reduce unnecessary overhead of memory copy and reduce consumption of the memory itself, and moreover, it is possible to reduce the processing time by sharing the processing module.

As described above, in the present disclosure, in constructing the multitasking structure, a prototype structure in which the existing single-tasking structures are subjected to pipeline is formed, the same or similar processing modules are searched for among the processing modules included in the single-tasking structure in the prototype structure, and the searched same or similar processing modules share the parameter, or share the processing module, or the processing modules are coupled or decoupled.

That is, in the present disclosure, the prototype structure that is the structure in which the plurality of single-tasking structures is only subjected to pipeline is generated, and the processing modules in the plurality of single-tasking structures included in the prototype structure are optimized on the basis of the search result of the prototype structure, and thereby, the multitasking structure can be easily constructed.

### <<2. Embodiment of present disclosure>>

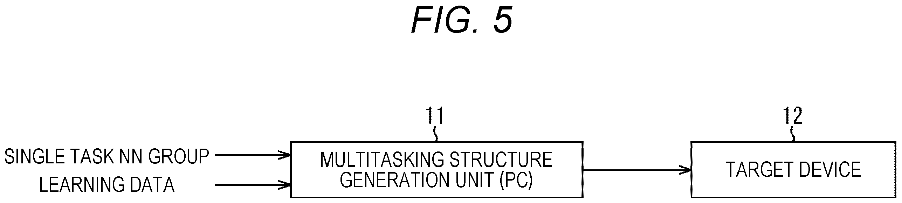

Next, a configuration example of the information processing system of the present disclosure will be described with reference to Fig. 5.

The information processing system in Fig. 5 includes a multitasking structure generation unit 11 including a personal computer (PC), and a target device 12.

The multitasking structure generation unit 11 constructs a multitasking structure including a neural network (NN) for achieving multitasking to be executed by the target device 12 such as a robot or a moving object including various sensors, supplies the multitasking structure to the target device 12, and achieves the multitasking.

More specifically, the multitasking structure generation unit 11 acquires individual single-tasking structures included in multitasking to be achieved by the target device 12, and constructs a prototype structure of the multitasking structure that is simply subjected to pipeline. Then, the multitasking structure generation unit 11 searches for the same or similar processing module between pieces of single tasking included in the prototype structure.

Here, the processing module has a configuration corresponding to each layer such as an input layer, a hidden layer, and an output layer in the NN, and is a module in which a program to be executed is described.

Then, the multitasking structure generation unit 11 optimizes the same or similar processing modules or blocks among the single-tasking structures included in the prototype structure by sharing the parameter or the processing module among the plurality of single-tasking structures or coupling or decoupling the processing modules, as described with reference to Figs. 2 to 4, and reconstructs a structure as a multitasking structure.

At this time, if necessary, the multitasking structure generation unit 11 relearns the reconstructed multitasking structure using the learning data, and updates the parameters used in the processing modules included in the multitasking structure.

The target device 12 is, for example, a device such as a robot or a moving object including various sensors and cameras such as a human sensor, a microphone, an illuminance sensor, a distance measurement sensor, an SLAM camera, an RGB camera, and a ToF sensor.

The target device 12 acquires an NN as a multitasking structure for embodying multitasking supplied from the multitasking structure generation unit 11, and achieves multitasking on the basis of detection results of various sensors and cameras.

### <Multitask execution processing>

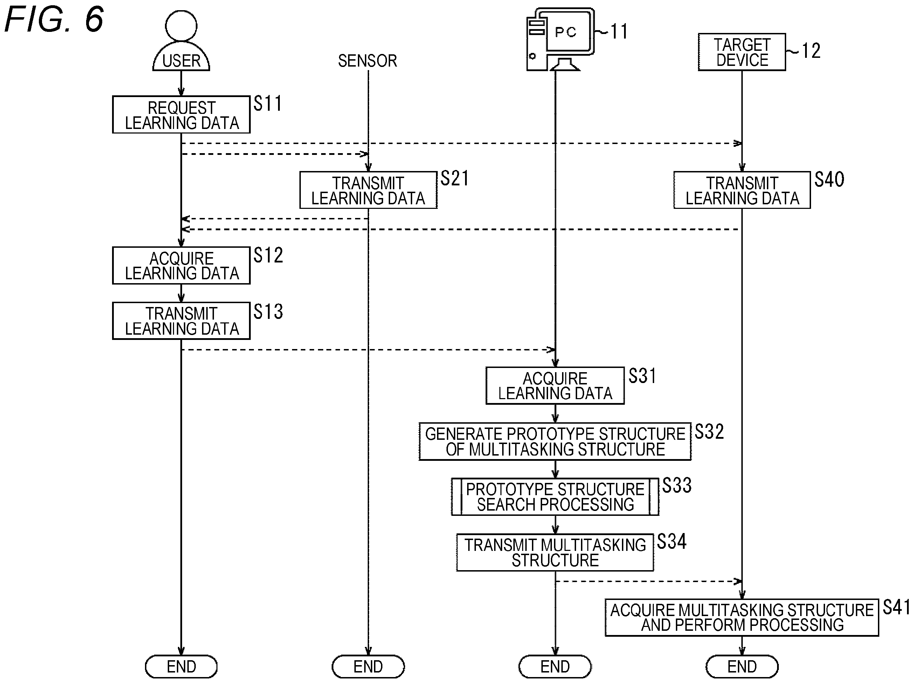

Next, multitasking execution processing for causing the target device 12 in the information processing system of Fig. 5 to achieve multitasking will be described with reference to the flowchart of Fig. 6.

In Step S11, the user requests learning data of One-Shot or Few-Shot from a sensor or a camera having performance equivalent to that of various sensors or cameras provided in the target device 12.

In Step S21, a sensor or a camera having performance equivalent to that of various sensors or cameras provided in the target device 12 returns learning data of One-Shot or Few-Shot to the user.

Here, the learning data of One-Shot or Few-Shot is one time or several times of learning data required for machine learning or the like.

Note that the learning data may be learning data of a larger number of times than One-Shot or Few-Shot. However, by using One-Shot or Few-Shot, it is possible to obtain a parameter (coefficient) that can achieve multitasking that is not highly accurate but can withstand practical use while reducing a processing load and a processing time related to learning.

In Step S12, the user acquires learning data of One-Shot or Few-Shot supplied from a sensor or a camera having performance equivalent to that of various sensors or cameras provided in the target device 12.

Note that the learning data of One-Shot or Few-Shot may be directly requested to the target device 12.

In this case, in Step S40, the target device 12 returns learning data of One-Shot or Few-Shot related to a sensor, a camera, or the like provided in itself to the user.

Note that, here, the description will be given on the assumption that learning data of One-Shot or Few-Shot is supplied from a sensor or a camera equivalent to the target device 12 provided separately from the target device 12 by the processing of Step S21.

In Step S13, the user supplies the acquired learning data of One-Shot or Few-Shot to the multitasking structure generation unit 11 including a PC.

In Step S31, the multitasking structure generation unit 11 acquires learning data of One-Shot or Few-Shot.

In Step S32, the multitasking structure generation unit 11 constructs a prototype structure of a multitasking structure simply performing pipeline on an existing single-tasking structure as a multitasking structure for achieving multitasking to be executed on the target device 12.

However, as described with reference to Fig. 1, the prototype structure of the multitasking structure constructed by the processing in Step S32 is a structure including overlapping of processing modules and the like, and there is a possibility that a processing load is large and a processing time is large, so that the prototype structure is not an optimized multitasking structure.

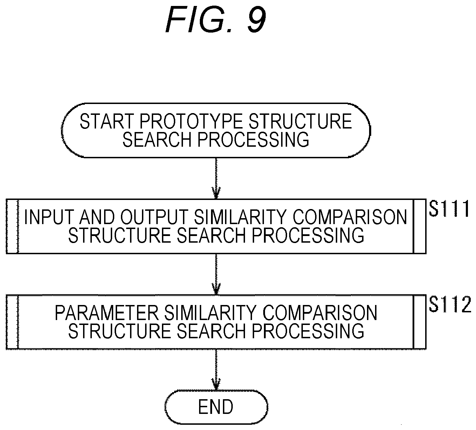

In Step S33, with reference to the flowchart of Fig. 9, the multitasking structure generation unit 11 executes prototype structure search processing as described later, searches for similar processing modules, and optimizes the multitasking structure including the prototype structure by processing such as parameter sharing, processing module sharing, and coupling or decoupling the processing modules, thereby achieving higher processing efficiency and constructing the multitasking structure.

In Step S34, the multitasking structure generation unit 11 supplies the completed multitasking structure to the target device 12.

In Step S41, the target device 12 acquires the multitasking structure supplied from the multitasking structure generation unit 11 and executes multitasking.

By the above processing, a multitasking structure in an optimized state is constructed, and thus, optimal multitasking is achieved by the target device 12.

As a result, the overhead of the memory can be reduced and the processing load can be reduced, and the parameters of the processing modules and the blocks are shared and the processing modules and the blocks themselves are shared, and thereby, the multitasking structure is optimized, so that the processing load can be reduced and the processing speed can be increased.

### <Configuration example of multitasking structure generation unit>

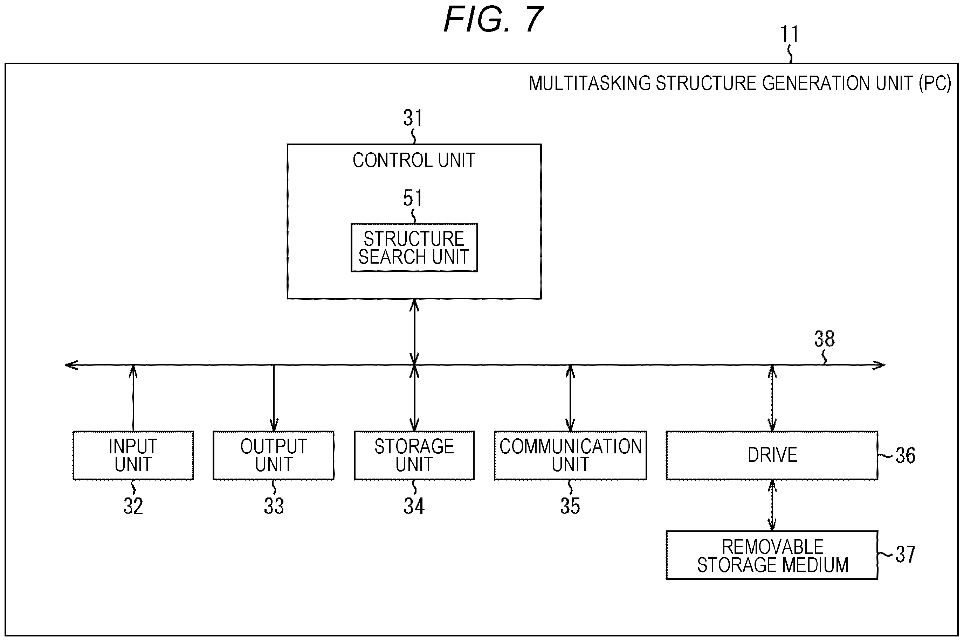

Next, a configuration example of the multitasking structure generation unit 11 including a PC will be described with reference to a block diagram of Fig. 7.

More specifically, the multitasking structure generation unit 11 includes a control unit 31, an input unit 32, an output unit 33, a storage unit 34, a communication unit 35, a drive 36, and a removable storage medium 37, which are electrically connected to each other via a bus 38.

The control unit 31 includes a processor and a memory, and controls the entire operation of the multitasking structure generation unit 11.

Furthermore, the control unit 31 includes a structure search unit 51, executes prototype structure search processing as described later, and constructs a multitasking structure for causing the target device 12 to execute multitasking using an existing single-tasking structure.

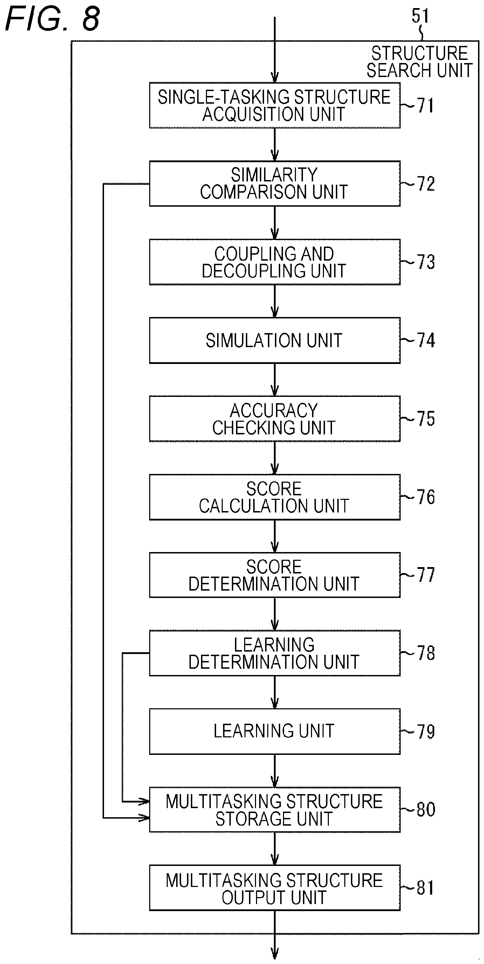

Note that details of the structure search unit 51 will be described later with reference to Fig. 8.

The input unit 32 includes a keyboard, an operation button, and the like, receives an operation input of the user, and outputs the operation input to the control unit 31.

The output unit 33 includes a display unit that displays an image, for example, a display including a liquid crystal display (LCD), an organic electro luminescence (EL), or the like, and a sound output unit including a speaker that outputs sound, and outputs an image and sound as necessary.

The storage unit 34 is controlled by the control unit 31, includes a hard disk drive (HDD), a solid state drive (SSD), a semiconductor memory, or the like, and writes or reads various data and programs.

Furthermore, as described with reference to Fig. 6, the storage unit 34 stores One-Shot or Few-Shot learning data by a sensor or a camera provided in the target device 12 or a sensor or a camera having equivalent performance corresponding to the sensor or the camera provided in the target device 12, or a single-tasking structure (corresponding NN) used for existing hardware.

The communication unit 35 is controlled by the control unit 31, communicates with the target device 12 via a communication network represented by a local area network (LAN) or the like in a wired (or wireless (not illustrated)) manner, and transmits and receives (the NN corresponding to) the generated multitasking structure.

The drive 36 reads and writes data with respect to a removable storage medium 37 such as a magnetic disc (including a flexible disc), an optical disc (including compact disc-read only memory (CD-ROM) and a digital versatile disc (DVD)), a magneto-optical disc (including mini disc (MD)), or a semiconductor memory.

### <Configuration example of structure search unit>

Next, a configuration example of the structure search unit 51 will be described with reference to Fig. 8.

The structure search unit 51 includes a single-tasking structure acquisition unit 71, a similarity comparison unit 72, a coupling and decoupling unit 73, a simulation unit 74, an accuracy checking unit 75, a score calculation unit 76, a score determination unit 77, a learning determination unit 78, a learning unit 79, a multitasking structure storage unit 80, and a multitasking structure output unit 81.

The single-tasking structure acquisition unit 71 reads (an NN corresponding to) a necessary existing single-tasking structure from, for example, the storage unit 34 according to multitasking to be executed by the target device 12, and constructs a prototype structure of the multitasking structure.

That is, for example, as described with reference to Fig. 1, in a case of constructing (an NN including) a multitasking structure including three types of tasks of object recognition, map construction, path planning, and motion control, the existing single tasks T1 to T3 in Fig. 1 are read, and a prototype structure of the multitasking structure as illustrated in Fig. 1 is constructed.

In this case, each of the plurality of single-tasking structures included in the prototype structure of the multitasking structure may include processing modules or blocks that execute the same or similar processing, there is a case where overlapping processing is repeated or processing waste such as repeated reading of the same parameter is included, and the multitasking structure is not a completed (optimized) multitasking structure.

The similarity comparison unit 72 compares the similarities of the processing modules included in the single-tasking structure included in the prototype structure of the multitasking structure or the blocks including the plurality of processing modules, determines whether or not the similarity is higher than a predetermined threshold, and in a case where the similarities are higher than the predetermined threshold, outputs the result to the coupling and decoupling unit 73 in order to optimize multitasking.

Here, there are two types of similarity: input and output similarity that is similarity of data input and output in units of processing modules or blocks; and parameter similarity that is similarity of a parameter corresponding to Hyper Parameter in the NN used in units of processing modules or blocks.

The similarity comparison unit 72 determines whether or not there is similarity for each of the input and output similarity and the parameter similarity with respect to the processing module or the block.

Note that, in a case where the similarity is lower than a predetermined threshold and is not similar, the similarity comparison unit 72 cannot optimize multitasking, and thus stores the processing module or the block in the multitasking structure storage unit 80 as a completed processing module.

The coupling and decoupling unit 73 sets to share a processing module or a parameter in a block between single task NNs having high input and output similarity or parameter similarity, or to share a processing module or a block itself, and if necessary, couples or decouples the processing module or the block to optimize a multitasking structure as a prototype structure, thereby constructing a completed new multitasking structure.

Then, the coupling and decoupling unit 73 outputs the optimized and newly constructed multitasking structure to the simulation unit 74.

That is, as described with reference to Fig. 2, in a case where the processing module M2 and the processing module M12 are similar to each other, the coupling and decoupling unit 73 sets the parameters of the processing module M2 and the processing module M12 to be shared.

Furthermore, as described with reference to Fig. 3, when the input and output similarity and the parameter similarity between the processing module M2 and the block including the processing modules M11 to M13 are similar, the coupling and decoupling unit 73 couples the processing modules M11 to M13 to construct the processing module M2', and sets the parameters to be shared with the processing module M2.

Moreover, as described with reference to Fig. 4, in a case where the input and output similarity and the parameter similarity are similar between the processing modules M2, M12, the coupling and decoupling unit 73 shares the processing module to input the output result of the processing module M2 to the processing module M13 at the subsequent stage of the processing module M12, and rearranges the connection configuration.

The simulation unit 74 executes a simulation when the target device 12 is operated by (an NN including) the newly constructed optimized multitasking structure, and outputs a simulation processing result to the accuracy checking unit 75.

The accuracy checking unit 75 checks the processing accuracy of the newly constructed optimized multitasking structure from the simulation processing result by the newly constructed multitasking structure, and outputs information of the checked processing accuracy to the score calculation unit 76.

The score calculation unit 76 calculates a score related to the processing accuracy of the newly constructed optimized multitasking structure on the basis of the processing accuracy of the simulation processing result, and outputs the score to the score determination unit 77.

The score determination unit 77 compares the score related to the processing accuracy of (the NN including) the newly constructed optimized multitasking structure with a predetermined threshold to determine whether or not the newly constructed multitasking structure is usable, and outputs the usable multitasking structure together with the score to the learning determination unit 78.

The learning determination unit 78 determines whether or not relearning of a newly constructed optimized multitasking structure regarded as a usable multitasking structure is necessary.

For example, in a case where the score related to the processing accuracy is higher than a predetermined threshold that can be used but is not sufficient processing accuracy, it is regarded that relearning is necessary in order to improve the processing accuracy, and the determination result is output to the learning unit 79.

Furthermore, for example, in a case where the score related to the processing accuracy is sufficient processing accuracy, relearning for improving the processing accuracy is not necessary, and thus, the determination result is output to the learning unit 79, and the newly constructed available multitasking structure and the score are output to the multitasking structure storage unit 80 in association with each other.

The learning unit 79 causes a newly constructed optimized multitasking structure to be learned on the basis of the learning data, updates parameters used by various processing modules, and stores the updated parameters in the multitasking structure storage unit 80.

As described above, in the multitasking structure storage unit 80, similar processing modules or blocks having input and output similarity or parameter similarity higher than a predetermined threshold are shared as necessary, parameters are shared, or reconfiguration is made by coupling or decoupling, and thereby, a newly constructed optimized multitasking structure is stored together with scores.

In other words, in the multitasking structure storage unit 80, a newly constructed optimized multitasking structure in which shared processing modules and blocks, shared parameters, connection patterns of processing modules reconfigured by coupling or decoupling, and the like are variously different is stored together with scores.

The multitasking structure output unit 81 outputs, to the target device 12, an optimized newly constructed multitasking structure having the highest score among various different newly constructed multitasking structures stored in the multitasking structure storage unit 80, and causes the target device 12 to execute multitasking.

### <Prototype structure search processing>

Next, prototype structure search processing will be described with reference to the flowchart of Fig. 9.

In Step Sill, the structure search unit 51 executes input and output similarity comparison structure search processing, searches for processing modules or blocks having high input and output similarity between single-tasking structures included in a prototype structure of multitasking, and optimizes and constructs a new multitasking structure on the basis of a search result. Then, the structure search unit 51 stores the constructed multitasking structure and a score that is an evaluation of processing accuracy.

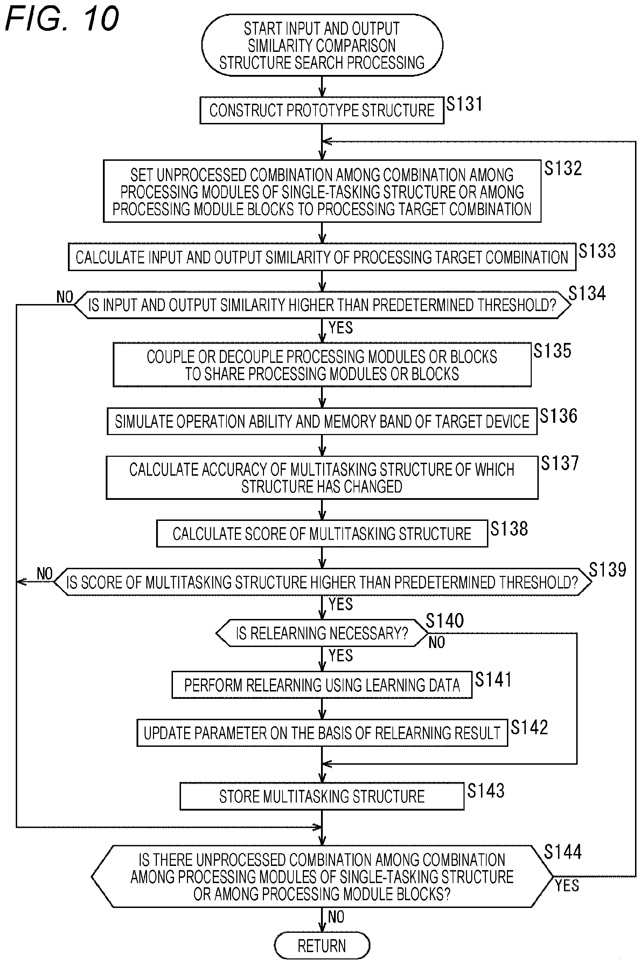

Note that the input and output similarity comparison structure search processing will be described later in detail with reference to the flowchart of Fig. 10.

In Step S112, the structure search unit 51 executes parameter similarity comparison structure search processing, searches for processing modules or blocks having high parameter similarity between single-tasking structures included in a prototype structure of multitasking, and optimizes and constructs a new multitasking structure on the basis of a search result. Then, the structure search unit 51 stores the constructed multitasking structure and a score that is an evaluation of processing accuracy.

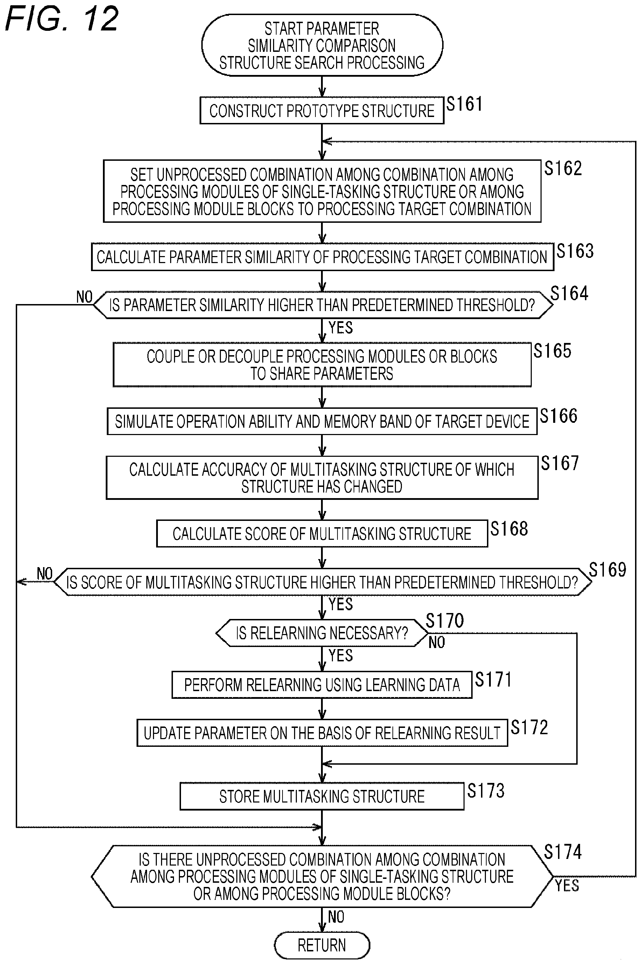

Note that the parameter similarity comparison structure search processing will be described later in detail with reference to the flowchart of Fig. 12.

Through the above processing, the multitasking structure is newly constructed on the basis of the input and output similarity and the parameter similarity, and is stored together with the score.

Among the multitasking structures configured as described above, one having the highest score is selected, and multitasking is executed by the target device.

Note that, although an example in which the parameter similarity comparison structure search processing is performed after the input and output similarity comparison structure search processing is performed has been described above, the order of processing may be switched. Furthermore, in the above description, an example has been described in which both the input and output similarity comparison structure search processing and the parameter similarity comparison structure search processing are executed. However, only one of the input and output similarity comparison structure search processing and the parameter similarity comparison structure search processing may be executed.

### <Input and output similarity comparison structure search processing>

Next, input and output similarity comparison structure search processing will be described with reference to the flowchart of Fig. 10.

In Step S131, the single-tasking structure acquisition unit 71 reads a necessary existing single-tasking structure from, for example, the storage unit 34 according to multitasking to be executed by the target device 12, and constructs a prototype structure of the multitasking structure.

In Step S132, the similarity comparison unit 72 sets an unprocessed combination among combinations among the processing modules included in the single-tasking structure included in the prototype structure of the multitasking structure or the blocks including the plurality of processing modules as a processing target combination.

In Step S133, the similarity comparison unit 72 calculates input and output similarity of a combination between the processing modules or between the blocks including a plurality of processing modules as a processing target combination.

In Step S134, the similarity comparison unit 72 determines whether or not the input and output similarity is higher than a predetermined threshold.

In Step S134, in a case where the input and output similarity is higher than the predetermined threshold, the similarity comparison unit 72 outputs the input and output similarity to the coupling and decoupling unit 73 in order to optimize multitasking.

In Step S135, the coupling and decoupling unit 73 couples or decouples the processing modules or blocks as necessary so as to share the processing modules or blocks between the single-tasking structures having high input and output similarity, thereby constructing a new multitasking structure.

Then, the coupling and decoupling unit 73 outputs the newly constructed multitasking structure to the simulation unit 74.

That is, as described with reference to Figs. 2 to 4, the coupling and decoupling unit 73 couples or decouples the processing modules or blocks as necessary in order to share the processing modules or blocks having high input and output similarity.

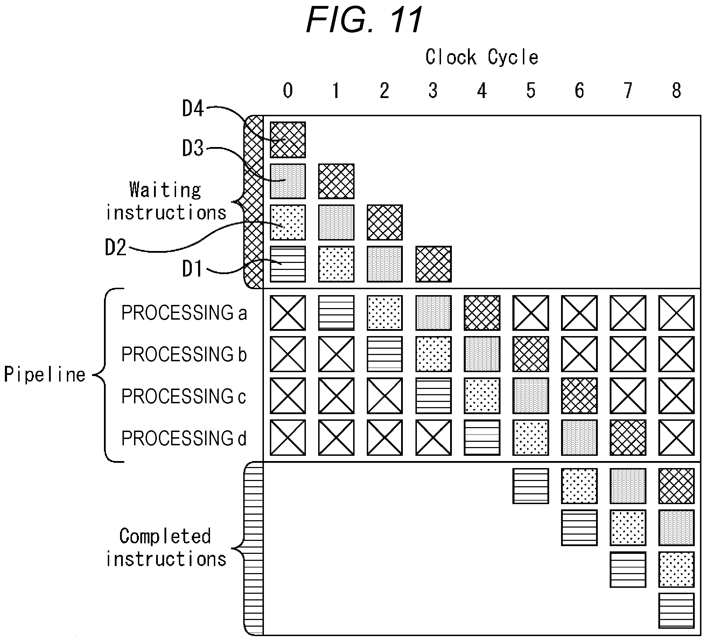

Furthermore, for example, as illustrated in Fig. 11, the processing modules may be coupled or decoupled so that data processed in time series can be efficiently processed by pipeline.

That is, Fig. 11 illustrates a processing structure in which pipeline is achieved by four processing modules including processing a to processing d for pieces of data D1 to D4 (displayed separately in different patterns in the drawing).

With such a processing structure, pipeline by four clock cycles by four processing modules can be achieved.

In other words, in a clock cycle 0, the pieces of data D1 to D4 are set to waiting instructions.

Then, the pieces of data D1 to D4 are sequentially subjected to pipeline by the processing a to the processing d every clock cycle.

That is, in the clock cycle 1 which is the next timing, the pieces of data D2 to D4 are set to waiting instructions, and the processing a is performed on the data D1.

In the clock cycle 2, the pieces of data D3, D4 are set to waiting instructions, the processing b is performed on the data D1, the processing a is performed on the data D2, and pipeline is performed.

In the clock cycle 3, the data D4 is set to waiting instructions, the processing c is performed on the data D1, the processing b is performed on the data D2, the processing a is performed on the data D3, and pipeline is performed.

In the clock cycle 4, the processing d is performed on the data D1, the processing c is performed on the data D2, the processing b is performed on the data D3, the processing a is performed on the data D4, and pipeline is performed.

In the clock cycle 5, the data D1 is set to completed instructions, the processing d is performed on the data D2, the processing c is performed on the data D3, the processing b is performed on the data D4, and pipeline is performed.

In the clock cycle 6, the pieces of data D1, D2 are set to completed instructions, the processing d is performed on the data D3, the processing c is performed on the data D4, and pipeline is performed.

In the clock cycle 7, the pieces of data D1 to D3 are set to completed instructions, the processing d is performed on the data D4, and pipeline is performed.

In the clock cycle 8, the pieces of data D1 to D4 are set to completed instructions.

Here, for example, in a case where the processing a is reading processing, the processing b is decoding processing, the processing c is execution processing, and the processing d is write-back processing, the pieces of data D1 to D4 can be subjected to pipeline in the clock cycles 0 to 8 on the basis of the hardware configuration and the memory band of the target device 12.

Furthermore, the processing modules may be coupled or decoupled by hardware processing capability. That is, in a case where the processing a takes twice the processing time of the processing b to d depending on the performance or processing capability of the hardware, the processing module of the processing a may be decoupled into two so as to be equal to the processing time of the processing b to d, and the processing times of all the processing modules may be equalized.

In Step S136, the simulation unit 74 executes a simulation in a case where the target device 12 operates in the calculation capability and the memory band by the newly constructed multitasking structure, and outputs the simulation processing result to the accuracy checking unit 75.

In Step S137, the accuracy checking unit 75 calculates the processing accuracy of the newly constructed multitasking structure from the simulation processing result by the newly constructed multitasking structure, and outputs information of the calculated processing accuracy to the score calculation unit 76.

In Step S138, the score calculation unit 76 calculates a score related to the processing accuracy of the newly constructed multitasking structure on the basis of the processing accuracy of the simulation processing result, and outputs the score to the score determination unit 77.

In Step S139, the score determination unit 77 determines whether or not the newly constructed multitasking structure is optimized by comparing a score related to the processing accuracy of the newly constructed multitasking structure with a predetermined threshold.

In a case where the score related to the processing accuracy is higher than the predetermined threshold and the newly constructed multitasking structure is regarded as being optimized in Step S139, the score determination unit 77 outputs the multitasking structure together with the score to the learning determination unit 78.

In Step S140, the learning determination unit 78 determines whether or not relearning of the newly constructed multitasking structure regarded as the optimized multitasking structure is necessary.

In Step S140, for example, in a case where the score related to the processing accuracy of the newly constructed multitasking structure is regarded as being optimized to be higher than the predetermined, but the processing accuracy is not sufficient, the learning determination unit 78 regards that relearning is necessary in order to improve the processing accuracy, and outputs the newly constructed multitasking structure to the learning unit 79.

In Step S141, the learning unit 79 causes the newly constructed multitasking structure to be relearned on the basis of the learning data.

In Step S142, the learning unit 79 reconfigures and updates the parameters used by the various processing modules along with the relearning.

Then, in Step S143, the learning unit 79 stores the reconfigured multitasking structure in the multitasking structure storage unit 80 in association with the score.

In Step S144, the similarity comparison unit 72 determines whether or not there is an unprocessed combination among combinations among the processing modules included in the single-tasking structure included in the prototype structure of the multitasking structure or the blocks including the plurality of processing modules, and in a case where there is an unprocessed combination, the process returns to Step S132.

That is, the processing of Steps S132 to S144 is repeated until the optimization processing based on the input and output similarity is performed for all the combinations among the processing modules included in the single-tasking structure included in the prototype structure of the multitasking structure or the blocks including the plurality of processing modules.

Then, in Step S144, in a case where it is regarded that the optimization processing has been performed for all the combinations among the processing modules included in the single-tasking structure included in the prototype structure of the multitasking structure or the blocks including the plurality of processing modules, the process ends.

Furthermore, in a case where it is regarded in Step S134 that the input and output similarity is lower than the predetermined threshold and there is no similarity, or in a case where it is regarded in Step S139 that the score related to the processing accuracy is lower than the predetermined threshold and the newly constructed multitasking structure is not optimized, the process proceeds to Step S144. That is, in this case, the optimization processing is not substantially performed.

Moreover, in Step S140, in a case where relearning is not necessary, the learning determination unit 78 stores the reconfigured multitasking structure in the multitasking structure storage unit 80 in association with the score.

Through the above processing, as described above, in the multitasking structure storage unit 80, similar processing modules or blocks having input and output similarity higher than a predetermined threshold are reconfigured by sharing the processing module or the block as necessary, sharing parameters, or coupling or decoupling, and thereby, the structure is stored as a newly constructed optimized multitasking structure together with the score.

In other words, in the multitasking structure storage unit 80, a newly constructed optimized multitasking structure including the processing module or the block reconfigured by sharing the processing module or the block performing similar or the same processing, sharing parameters, or coupling or decoupling is stored together with the score.

That is, when a new multitasking structure is constructed, a prototype structure of the multitasking structure is generated on the basis of existing single tasking. Moreover, similar processing modules and blocks are searched for from the input and output similarity of the processing modules and blocks between the single-tasking structures, parameters are shared, the processing modules and blocks are shared, the processing modules and blocks are coupled or decoupled for optimization, and a new multitasking structure is constructed and stored together with a score.

### <Parameter similarity comparison structure search processing>

Next, parameter similarity comparison structure search processing will be described with reference to a flowchart of Fig. 12. Note that the processing of Steps S161, S162, and S166 to S174 in the flowchart of Fig. 12 is similar to the processing of Steps S131, S132, and S136 to S144 in the flowchart of Fig. 11, and thus description thereof is omitted.

That is, by the processing of Steps S161 and S162, a necessary existing single-tasking structure is read from, for example, the storage unit 34 according to the multitasking to be executed by the target device 12, and the prototype structure of the multitasking structure is constructed. Then, an unprocessed combination among combinations among the processing modules included in the single-tasking structure included in the prototype structure of the multitasking structure or blocks including a plurality of processing modules is set as a processing target combination.

Then, in Step S163, the similarity comparison unit 72 calculates the parameter similarity of the combination between the processing modules to be the processing target combination or between the blocks including the plurality of processing modules.

In Step S164, the similarity comparison unit 72 determines whether or not the parameter similarity is higher than a predetermined threshold.

In Step S164, in a case where the parameter similarity is higher than the predetermined threshold, the similarity comparison unit 72 outputs the parameter similarity to the coupling and decoupling unit 73 in order to optimize multitasking.

In Step S165, the coupling and decoupling unit 73 couples or decouples the processing modules or blocks as necessary so as to share parameters in the processing modules or blocks between the single-tasking structures having high parameter similarity, thereby constructing a new multitasking structure.

Then, the coupling and decoupling unit 73 outputs the newly constructed multitasking structure to the simulation unit 74.

Then, by the processing of Steps S166 to S174, in the multitasking structure storage unit 80, as described above, the structure is optimized by reconfiguration by coupling or decoupling so that parameters are shared by similar processing modules or blocks having parameter similarity higher than a predetermined threshold, and a new multitasking structure is constructed and stored together with the score.

In other words, in the multitasking structure storage unit 80, the processing modules and the blocks are reconfigured and optimized by being coupled or decoupled so that the parameters are shared by the processing modules and the blocks, and the newly constructed multitasking structure is stored together with the score.

The multitasking structure output unit 81 outputs a newly constructed multitasking structure higher than a predetermined score among the newly constructed multitasking structures that is optimized by reconfiguring the processing modules and the blocks by coupling or decoupling so that the processing modules and the blocks are shared or the parameters are shared, which are stored in the multitasking structure storage unit 80, to the target device 12 to execute multitasking.

That is, when a new multitasking structure is constructed, a prototype structure of the multitasking structure is generated on the basis of existing single tasking. Moreover, similar processing modules and blocks are searched for from the input and output similarity or parameter similarity of the processing modules and blocks between the single-tasking structures, parameters are shared, the processing modules and blocks are shared, the processing modules and blocks are coupled or decoupled for optimization, and a new optimized multitasking structure is constructed and stored together with a score.

Then, by the processing in Step S34 described with reference to Fig. 6, the multitasking structure output unit 81 outputs an NN having a score higher than a predetermined score in the optimized multitasking structure to the target device 12. Therefore, the target device 12 can achieve multitasking optimized by the NN having an optimized multitasking structure.

Note that, in the above description, an example has been described in which when the optimized multitasking structure is stored together with the score and output, the multitasking structure higher than the predetermined score is output to the target device 12. However, only the multitasking structure having the high score may be stored and the stored multitasking structure may be output to the target device 12.

By the processing as described above, for example, in a case where multitasking is achieved by the newly developed target device 12 with improved performance, it is possible to share, couple, and decouple processing modules and blocks, share parameters, or reset parameters by relearning using learning data in accordance with the performance and function of the target device 12 with improved performance by using the single-tasking structure used in the existing device, and it is possible to easily develop an NN as a multitasking structure.

Furthermore, in the above description, an example has been described in which, according to target multitasking, first, a prototype structure of a multitasking structure is configured by combining existing single-tasking structures, and similar processing modules and blocks are shared, coupled, and decoupled on the basis of input and output similarity and parameter similarity of the processing modules and blocks included in the single-tasking structure, parameters are shared by similar processing modules and blocks, or parameters are reset by relearning using learning data.

However, in a case where the existing multitasking structure is reused for the new target device 12, the existing multitasking structure is treated as the prototype structure of the multitasking structure, and the existing multitasking structure can be optimized and reused for the new target device 12 by being optimized in a similar manner to that described above according to the performance and function of the new target device 12, and the development cost can be reduced.

### <<3. Application Example 1>>

### <Prototype structure search processing with improved search efficiency>

In the above description, an example has been described in which a combination among all the processing modules of the single-tasking structure included in the prototype structure of the multitasking structure or a combination among blocks including a plurality of processing modules is set as the combination to be processed, and a combination having input and output similarity or parameter similarity higher than a predetermined threshold is searched for.

However, some of the single-tasking structures included in the prototype structure of the multitasking structure include processing modules and blocks having low similarity with other single-tasking structures.

Therefore, among the single-tasking structures included in the prototype structure of the multitasking structure, those including processing modules or blocks having low similarity with other single-tasking structures may be excluded from the processing target by statistical processing, and the prototype structure search processing may be executed.

By above processing, among the single-tasking structures included in the prototype structure, the single-tasking structure including the processing modules or blocks having the low input and output similarity or the low parameter similarity is excluded, so that the prototype structure search processing of only the single-tasking structure including the processing modules or blocks having the high input and output similarity or the high parameter similarity can be achieved, and the search efficiency of the prototype structure search processing can be improved.

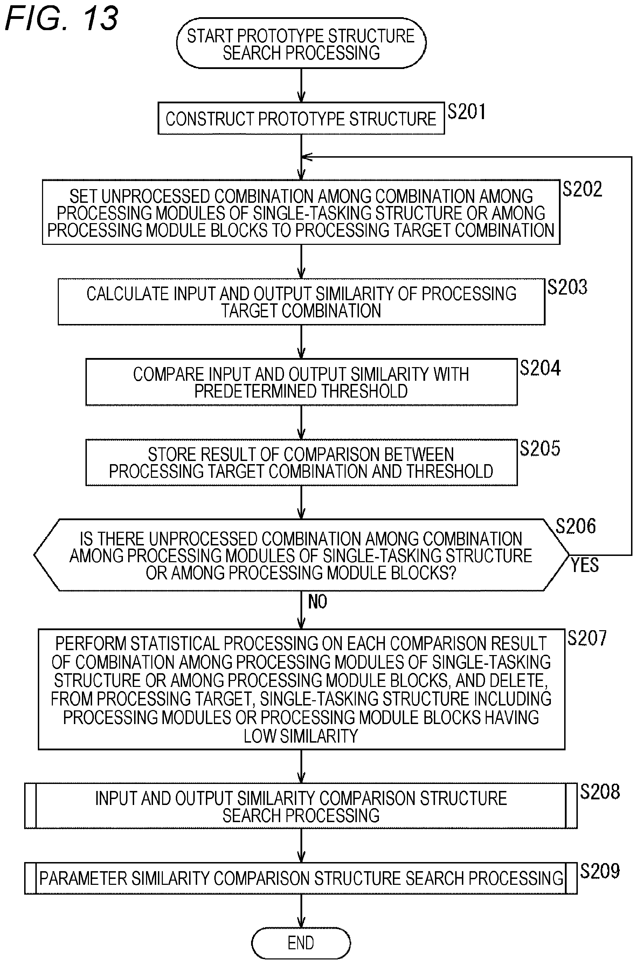

Next, prototype structure search processing with improved search efficiency will be described with reference to the flowchart of Fig. 13. Note that the processing of Steps S208, S209 in the flowchart of Fig. 13 is similar to the processing of Steps Sill, S112 described with reference to the flowchart of Fig. 9, and thus the description thereof will be omitted.

In Step S201, the single-tasking structure acquisition unit 71 reads a necessary existing single-tasking structure from, for example, the storage unit 34 according to multitasking to be executed by the target device 12, and constructs a prototype structure of the multitasking structure.

In Step S202, the similarity comparison unit 72 sets an unprocessed combination among combinations among the processing modules included in the single-tasking structure included in the prototype structure of the multitasking structure or blocks including a plurality of processing modules as a processing target combination.

In Step S203, the similarity comparison unit 72 calculates input and output similarity of a combination between the processing modules or between the blocks including a plurality of processing modules as a processing target combination.

In Step S204, the similarity comparison unit 72 compares the input and output similarity with a predetermined threshold.

In Step S205, the similarity comparison unit 72 stores a comparison result between the input and output similarity and a predetermined threshold.

In Step S206, the similarity comparison unit 72 determines whether or not there is an unprocessed combination among combinations among the processing modules included in the single-tasking structure included in the prototype structure of the multitasking structure or blocks including a plurality of processing modules.

In Step S206, in a case where it is determined that there is an unprocessed combination among combinations among the processing modules included in the single-tasking structure included in the prototype structure of the multitasking structure or blocks including a plurality of processing modules, the process returns to Step S202.

That is, the input and output similarity for all the combinations among the processing modules included in the single-tasking structure included in the prototype structure of the multitasking structure or among the blocks including the plurality of processing modules is compared with the threshold, and in a case where it is determined that there is no unprocessed combination, the process proceeds to Step S207.

In Step S207, the similarity comparison unit 72 statistically processes the comparison result between the input and output similarity and the predetermined threshold among the processing modules included in the single-tasking structure included in the prototype structure of the multitasking structure or the combination of the blocks including the plurality of processing modules. Then, the similarity comparison unit 72 excludes another single-tasking structure and a processing module having low input and output similarity or a single-tasking structure including blocks from processing targets in the prototype structure search processing.

Then, in Steps S208 and S209, input and output similarity comparison structure search processing and parameter similarity comparison structure search processing are executed.

As a result of this processing, among the single-tasking structures included in the prototype structure of the multitasking structure, the single-tasking structure having low input and output similarity among the processing modules or among the blocks including the plurality of processing modules is excluded from the other single-tasking structures, and the processing is optimized by sharing the parameters, sharing the processing modules or the blocks, and coupling or disconnection among the processing modules or among the blocks including the plurality of processing modules, so that the search processing efficiency of the prototype structure search processing can be improved.

Note that, in the prototype structure search processing described with reference to the flowchart of Fig. 13, an example has been described in which a single-tasking structure including processing modules and blocks having low input and output similarity is excluded from the processing target of the prototype structure search processing. However, a single-tasking structure having low parameter similarity among processing modules or blocks with another single-tasking structure may be excluded from the target of the prototype structure search processing. Moreover, a single-tasking structure having both low input and output similarity and low parameter similarity may be excluded from the target of the prototype structure search processing.

### <<4. Application example 2>>

In the above, as described with reference to Fig. 6, an example has been described in which the multitasking structure found by the prototype structure search processing is supplied to the target device 12 by the multitasking structure generation unit 11 including the PC using the sensor corresponding to the target device 12 or the learning data acquired from the target device 12 to achieve the multitasking.

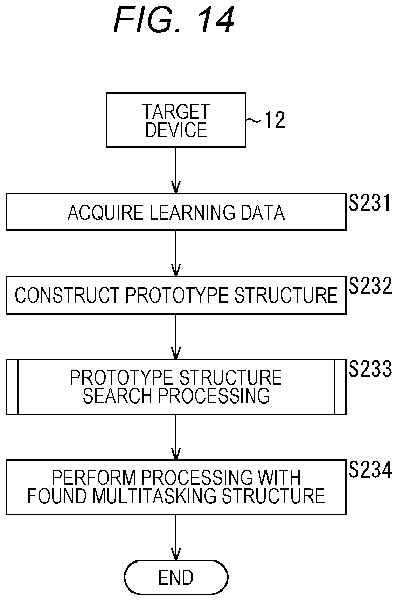

However, as illustrated in the flowchart of Fig. 14, the target device 12 may independently achieve multitasking.

In this case, the target device 12 functions as the multitasking structure generation unit 11.

That is, in Step S231, the target device 12 acquires (reads) learning data of One-Shot or Few-Shot of a sensor having a configuration corresponding to various sensors included in the target device 12.

In Step S232, the target device 12 functioning as the multitasking structure generation unit 11 constructs a prototype structure of the multitasking structure by combining single-tasking structures required for the multitasking structure.

In Step S233, the target device 12 functioning as the multitasking structure generation unit 11 executes prototype structure search processing that has been described with reference to the flowchart of Fig. 9, searches for similar processing modules, and optimizes the multitasking structure by processing such as parameter sharing, processing module sharing, and coupling or decoupling the processing modules, thereby achieving higher processing efficiency and constructing a completed multitasking structure.

With the above processing, the multitasking structure can be generated only by target device 12 functioning as the multitasking structure generation unit 11.

Therefore, for example, in a case where a multitasking structure necessary for operating on the earth is constructed in the target device 12 as an existing multitasking structure, the target device 12 can reconstruct the multitasking structure by itself by the above-described processing.

Therefore, for example, when the target device 12 recognizes that the target device 12 has reached the moon surface, it is possible to reconstruct a multitasking structure suitable for the moon surface by acquiring learning data necessary for operating on the moon surface, relearning the multitasking structure, and updating the parameters.

As a result, the target device 12 can repeatedly and autonomously reconstruct an optimal multitasking structure in the current environment in real time while adapting to the current environment, and multitasking can be achieved while adapting to various environments.

### <<5. Application example 3>>

In the above, as described with reference to Fig. 14, an example has been described in which the target device 12 functions as the multitasking structure generation unit 11 by using the learning data of its own sensor to execute the prototype structure search processing and achieve the multitasking by the optimized multitasking structure.

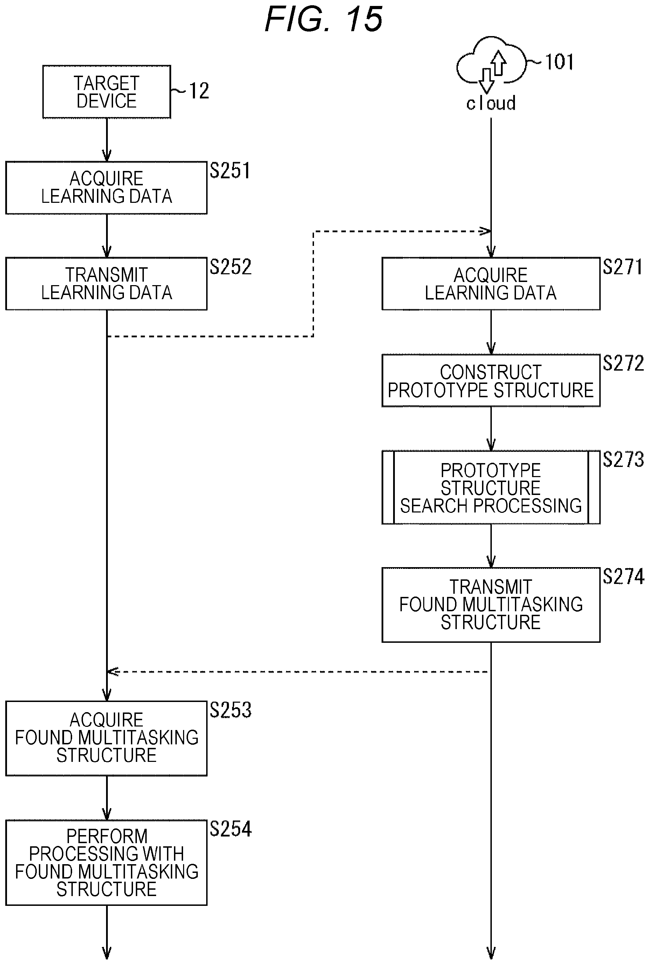

However, as illustrated in the flowchart of Fig. 15, a cloud computer may function as the multitasking structure generation unit 11 to achieve multitasking.

That is, in Step S251, the target device 12 acquires learning data of One-Shot or Few-Shot of a sensor having a configuration corresponding to various sensors included in the target device 12.

In Step S252, the target device 12 transmits learning data of One-Shot or Few-Shot of a sensor having a configuration corresponding to various sensors included in the target device 12, to the cloud computer 101.

In Step S271, the cloud computer 101 functioning as the multitasking structure generation unit 11 acquires learning data of One-Shot or Few-Shot.

In Step S272, the cloud computer 101 functioning as the multitasking structure generation unit 11 combines the single-tasking structures required for the multitasking structure to construct a prototype structure of the multitasking structure.

In Step S273, the cloud computer 101 functioning as the multitasking structure generation unit 11 executes prototype structure search processing that has been described with reference to the flowchart of Fig. 9, searches for similar processing modules, and optimizes the multitasking structure by processing such as parameter sharing, processing module sharing, and coupling or decoupling the processing modules, thereby achieving higher processing efficiency and constructing a completed multitasking structure.

In Step S274, the cloud computer 101 functioning as the multitasking structure generation unit 11 supplies the completed multitasking structure to the target device 12.

In Step S253, the target device 12 acquires the multitasking structure supplied from the cloud computer 101 functioning as the multitasking structure generation unit 11 and executes multitasking.

In Step S254, the target device 12 acquires the multitasking structure supplied from the cloud computer 101 functioning as the multitasking structure generation unit 11 and executes multitasking.

With the above processing, a multitasking structure in an optimized state is constructed by the prototype structure search processing by the cloud computer 101, and thus, highly efficient multitasking by the target device 12 is achieved.

Therefore, it is possible to reduce the overhead of the memory and reduce the processing load, and it is possible to reduce the processing load and increase the processing speed by sharing the parameters of the processing module and the processing module itself.

Furthermore, the target device 12 can achieve multitasking based on a multitasking structure by communicating with the cloud computer 101.

As a result, it is possible to easily construct a multitasking structure including optimized processing modules and blocks.

### <<6. Example of executing by software>>

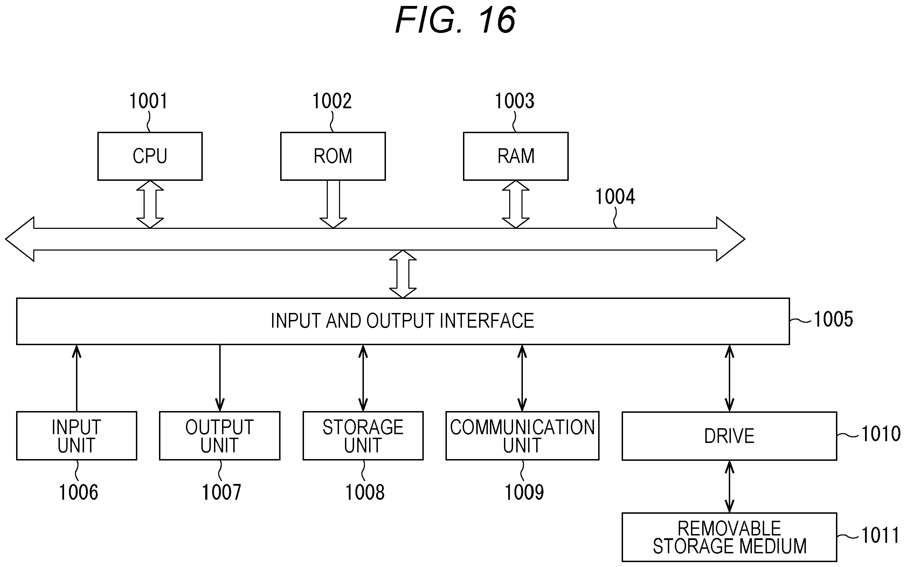

Fig. 16 illustrates a configuration example of a general-purpose computer. This personal computer has a built-in central processing unit (CPU) 1001. An input and output interface 1005 is connected to the CPU 1001 via a bus 1004. A read only memory (ROM) 1002 and a random access memory (RAM) 1003 are connected to the bus 1004.

The input and output interface 1005 is connected with an input unit 1006 including an input device such as a keyboard, or a mouse for inputting operation commands by the user, an output unit 1007 that outputs an image of a processing operation screen or a processing result to a display device, a storage unit 1008 including a hard disk drive or the like for storing programs and various data, and a communication unit 1009 including a local area network (LAN) adapter or the like and performing communication processing via a network typified by the Internet. Furthermore, the input and output interface 1005 is connected with a drive 1010 that reads and writes data with respect to a removable storage medium 1011 such as a magnetic disc (including a flexible disc), an optical disc (including compact disc-read only memory (CD-ROM) and a digital versatile disc (DVD)), a magneto-optical disc (including mini disc (MD)), or a semiconductor memory.

The CPU 1001 is read out from a program stored in the ROM 1002 or the removable storage medium 1011 such as a magnetic disc, an optical disc, a magneto-optical disc, or a semiconductor memory, is installed in the storage unit 1008, and executes various processing in accordance with a program loaded into the RAM 1003 from the storage unit 1008. Furthermore, the RAM 1003 appropriately stores also data or the like necessary for the CPU 1001 to execute various processing.

In the computer configured as described above, for example, the CPU 1001 loads the program stored in the storage unit 1008 into the RAM 1003 via the input and output interface 1005 and the bus 1004, and executes the program, so that the above-described series of processing is performed.

The program executed by the computer (CPU 1001) can be provided by being recorded on the removable storage medium 1011 as a package medium or the like, for example. Furthermore, the program can be provided via a wired or wireless transmission medium such as a local area network, the Internet, or digital satellite broadcasting.

In the computer, a program can be installed in the storage unit 1008 via the input and output interface 1005 by mounting the removable storage medium 1011 to the drive 1010. Furthermore, the program can be received by the communication unit 1009 via a wired or wireless transmission medium and installed in the storage unit 1008. In addition, the program can be installed in the ROM 1002 or the storage unit 1008 in advance.

Note that the program executed by the computer may be a program of processing in chronological order according to the order described in the present specification or may be a program of processing in parallel or at necessary timing such as when a call is made.

Note that the CPU 1001 in Fig. 16 achieves the functions of the control unit 31 in Fig. 7.

Furthermore, in this specification, a system means a set of a plurality of constituent elements (devices, modules (parts), or the like), and it does not matter whether or not all constituent elements are in the same casing. Therefore, a plurality of devices that is housed in separate housings and is connected via a network, and one device in which a plurality of modules is housed in one housing are both systems.

Note that the embodiments of the present disclosure are not limited to the above-described embodiments, and various modifications are possible without departing from the gist of the present disclosure.

For example, in the present disclosure, it is possible to adopt a configuration of cloud computing in which one function is shared by a plurality of devices via a network, and is collaboratively processed.

Furthermore, each step described in the above-described flowchart can be executed by one device or shared by a plurality of devices.

Moreover, in a case where a plurality of pieces of processing is included in one step, a plurality of pieces of processing included in the one step can be executed by one device or shared and executed by a plurality of devices.

### REFERENCE SIGNS LIST

- 11: Multitasking structure generation unit
- 12: Target device
- 31: Control unit
- 32: Input unit
- 33: Output unit
- 34: Storage unit
- 35: Communication unit
- 36: Drive
- 37: Removable storage medium
- 51: Structure search unit
- 71: Single-tasking structure acquisition unit
- 72: Similarity comparison unit
- 73: Coupling and decoupling unit
- 74: Simulation unit
- 75: Accuracy checking unit
- 76: Score calculation unit
- 77: Score determination unit
- 78: Learning determination unit
- 79: Learning unit
- 80: Multitasking structure storage unit
- 81: Multitasking structure output unit

## Claims

1. An information processing apparatus (12, 101) comprising
an optimization unit (11) configured to optimize a prototype structure of a multitasking structure, that controls operation of a target device (12) and includes a plurality of pre-existing single-tasking structures, on a basis of processing modules of the single-tasking structures by reducing at least one of repeated processing and repeated reading of parameters of the processing modules for constructing the multitasking structure based on the prototype structure,
wherein each of the single-tasking structures includes the processing module or a block including a plurality of the processing modules, wherein the processing module is a layer of a neural network, and
the optimization unit (11) is configured to optimize the multitasking structure using the processing module or the block that has similarity, among the single-tasking structures;
wherein the optimization unit (11) is configured to optimize the multitasking structure by using the processing module or the block with similarity indicating a degree of similarity being higher than a predetermined threshold, among the single-tasking structures;
wherein the optimization unit (11) is configured to optimize the multitasking structure by sharing the processing module or the block with input and output similarity indicating a degree of similarity of input and output data being high, among the single-tasking structures, or
wherein the optimization unit (11) is configured to optimize the multitasking structure by sharing the processing module or the block with parameter similarity indicating a degree of similarity of a used parameter being higher than a predetermined value, among the single-tasking structures.

2. The information processing apparatus (12, 101) according to claim 1,
wherein the optimization unit (11) is configured to optimize the multitasking structure by sharing the processing module or the block with similarity indicating a degree of similarity being higher than a predetermined value, among the single-tasking structures.

3. The information processing apparatus (12, 101) according to claim 2,
wherein the optimization unit (11) is configured to optimize the multitasking structure by coupling or decoupling the processing module or the block with the similarity higher than the predetermined value to share the processing module or the block, among the single-tasking structures,
wherein the optimization unit (11) is configured to optimize the multitasking structure by coupling or decoupling the processing module or the block with the similarity higher than the predetermined value to share the processing module or the block according to performance and a function of hardware included in the target device, among the single-tasking structures.

4. The information processing apparatus (12, 101) according to claim 1,
wherein the optimization unit (11) is configured to optimize the multitasking structure by sharing a parameter used in the processing module or the block with similarity indicating a degree of similarity being higher than a predetermined value, among the single-tasking structures.

5. The information processing apparatus (12, 101) according to any one of the claims 1 to 4, further comprising:
a simulation unit (74) is configured to execute a simulation in a case where the multitasking structure optimized by the optimization unit is operated by the target device (12);
a score calculation unit (76) is configured to calculate a score indicating processing accuracy of multitasking achieved based on the multitasking structure by the simulation; and
a relearning unit (79) is configured to relearn the optimized multitasking structure based on the score.

6. The information processing apparatus (12, 101) according to claim 5,
wherein the relearning unit (79) is configured to update at least one of the parameter of the processing module and a block including a plurality of the processing modules included in the optimized multitasking structure by relearning using learning data.

7. The information processing apparatus (12, 101) according to claim 6,
wherein the learning data is data according to performance and a function of sensors and cameras provided in the target device (12).

8. The information processing apparatus (12, 101) according to claim 7,
wherein the processing module and the block execute predetermined processing on a basis of at least one of a sensing result supplied from the sensors (J1), an image supplied from the cameras (J2, J3), and a processing result of the processing module or the block, and output a processing result.

9. The information processing apparatus (12, 101) according to claim 8,
wherein the multitasking structure is a program using a neural network that controls operation of the target device (12), in particular
wherein each of the processing module and the block is a layer and a block in a program using the neural network.

10. The information processing apparatus (12, 101) according to any one of the claims 1 to 9,
wherein the information processing apparatus (12, 101) is the target device (12), or
wherein the information processing apparatus (12, 101) is a cloud computer (101).

11. An information processing method comprising
optimization processing of optimizing a prototype structure of a multitasking structure, that controls operation of a target device (12) and includes a plurality of preexisting single-tasking structures, on a basis of processing modules of the single-tasking structures by reducing at least one of repeated processing and repeated reading of parameters of the processing modules for constructing the multitasking structure based on the prototype structure,
wherein each of the single-tasking structures includes the processing module or a block including a plurality of the processing modules, wherein the processing module is a layer of a neural network, and
the optimization processing optimizes the multitasking structure using the processing module or the block that has similarity, among the single-tasking structures;
wherein the optimization processing optimizes the multitasking structure by using the processing module or the block with similarity indicating a degree of similarity being higher than a predetermined threshold, among the single-tasking structures;
wherein the optimization processing optimizes the multitasking structure by sharing the processing module or the block with input and output similarity indicating a degree of similarity of input and output data being high, among the single-tasking structures, or
wherein the optimization processing optimizes the multitasking structure by sharing the processing module or the block with parameter similarity indicating a degree of similarity of a used parameter being higher than a predetermined value, among the single-tasking structures.

12. A program that causes the information processing apparatus (12, 101) of claim 1 to execute the information processing method of claim 11.

## Patentansprüche

1. Informationsverarbeitungseinrichtung (12, 101), umfassend:
eine Optimierungseinheit (11), die konfiguriert ist, um eine Prototypstruktur einer Multitasking-Struktur, die einen Betrieb einer Zielvorrichtung (12) steuert und eine Vielzahl von vorher vorhandenen Single-Tasking-Strukturen enthält, auf einer Basis von Verarbeitungsmodulen der Single-Tasking-Strukturen durch Reduzieren mindestens eines von wiederholtem Verarbeiten und wiederholtem Lesen von Parametern der Verarbeitungsmodule zum Konstruieren der Multitasking-Struktur basierend auf der Prototypstruktur zu optimieren,
wobei jede der Single-Tasking-Strukturen das Verarbeitungsmodul oder einen Block einschließlich einer Vielzahl der Verarbeitungsmodule einschließt, wobei das Verarbeitungsmodul eine Schicht eines neuronalen Netzes ist, und
die Optimierungseinheit (11) konfiguriert ist, um die Multitasking-Struktur unter Verwendung des Verarbeitungsmoduls oder des Blocks, das/der eine Ähnlichkeit aufweist, unter den Single-Tasking-Strukturen zu optimieren;
wobei die Optimierungseinheit (11) konfiguriert ist, um die Multitasking-Struktur durch Verwenden des Verarbeitungsmoduls oder des Blocks mit Ähnlichkeit, die einen Ähnlichkeitsgrad angibt, der höher als ein vorbestimmter Schwellenwert ist, unter den Single-Tasking-Strukturen zu optimieren;
wobei die Optimierungseinheit (11) konfiguriert ist, um die Multitasking-Struktur durch Teilen des Verarbeitungsmoduls oder des Blocks mit einer Eingangs- und Ausgangsähnlichkeit, die einen hohen Ähnlichkeitsgrad von Eingangs- und Ausgangsdaten angibt, unter den Single-Tasking-Strukturen zu optimieren, oder
wobei die Optimierungseinheit (11) konfiguriert ist, um die Multitasking-Struktur durch Teilen des Verarbeitungsmoduls oder des Blocks mit Parameterähnlichkeit, die einen Ähnlichkeitsgrad eines verwendeten Parameters angibt, der höher als ein vorbestimmter Wert ist, unter den Single-Tasking-Strukturen zu optimieren.

2. Informationsverarbeitungseinrichtung (12, 101) nach Anspruch 1,
wobei die Optimierungseinheit (11) konfiguriert ist, um die Multitasking-Struktur durch Teilen des Verarbeitungsmoduls oder des Blocks mit Ähnlichkeit, die einen Ähnlichkeitsgrad angibt, der höher als ein vorbestimmter Wert ist, unter den Single-Tasking-Strukturen zu optimieren.

3. Informationsverarbeitungseinrichtung (12, 101) nach Anspruch 2,
wobei die Optimierungseinheit (11) konfiguriert ist, um die Multitasking-Struktur durch Koppeln oder Entkoppeln des Verarbeitungsmoduls oder des Blocks mit der Ähnlichkeit, die höher als der vorbestimmte Wert ist, um das Verarbeitungsmodul oder den Block zu teilen, unter den Single-Tasking-Strukturen zu optimieren,
wobei die Optimierungseinheit (11) konfiguriert ist, um die Multitasking-Struktur durch Koppeln oder Entkoppeln des Verarbeitungsmoduls oder des Blocks mit der Ähnlichkeit, die höher als der vorbestimmte Wert ist, um das Verarbeitungsmodul oder den Block gemäß einer Leistung und einer Funktion von Hardware zu teilen, die in der Zielvorrichtung eingeschlossen ist, unter den Single-Tasking-Strukturen zu optimieren.

4. Informationsverarbeitungseinrichtung (12, 101) nach Anspruch 1,
wobei die Optimierungseinheit (11) konfiguriert ist, um die Multitasking-Struktur durch Teilen eines Parameters, der in dem Verarbeitungsmodul oder dem Block mit Ähnlichkeit verwendet wird, die einen Ähnlichkeitsgrad angibt, der höher als ein vorbestimmter Wert ist, unter den Single-Tasking-Strukturen zu optimieren.

5. Informationsverarbeitungseinrichtung (12, 101) nach einem der Ansprüche 1 bis 4, ferner umfassend:
eine Simulationseinheit (74) ist konfiguriert, um eine Simulation in einem Fall auszuführen, in dem die Multitasking-Struktur, die durch die Optimierungseinheit optimiert wird, durch die Zielvorrichtung (12) betrieben wird;
eine Bewertungsberechnungseinheit (76) ist konfiguriert, um eine Bewertung zu berechnen, die eine Multitasking-Verarbeitungsgenauigkeit angibt, die basierend auf der Multitasking-Struktur durch die Simulation erreicht wird; und
eine Umlerneinheit (79) ist konfiguriert, um die optimierte Multitasking-Struktur basierend auf der Bewertung umzulernen.

6. Informationsverarbeitungseinrichtung (12, 101) nach Anspruch 5,
wobei die Umlerneinheit (79) konfiguriert ist, um mindestens eines des Parameters des Verarbeitungsmoduls und eines Blocks einschließlich einer Vielzahl der Verarbeitungsmodule, die in der optimierten Multitasking-Struktur eingeschlossen sind, durch Umlernen unter Verwendung von Lerndaten zu aktualisieren.

7. Informationsverarbeitungseinrichtung (12, 101) nach Anspruch 6,
wobei die Lerndaten Daten gemäß der Leistung und einer Funktion von Sensoren und Kameras sind, die in der Zielvorrichtung (12) bereitgestellt sind.

8. Informationsverarbeitungseinrichtung (12, 101) nach Anspruch 7,
wobei das Verarbeitungsmodul und der Block eine vorbestimmte Verarbeitung auf einer Basis von mindestens einem Erfassungsergebnis, das von den Sensoren (J1) geliefert wird, einem Bild, das von den Kameras (J2, J3) geliefert wird, und einem Verarbeitungsergebnis des Verarbeitungsmoduls oder des Blocks ausführen und ein Verarbeitungsergebnis ausgeben.

9. Informationsverarbeitungseinrichtung (12, 101) nach Anspruch 8,
wobei die Multitasking-Struktur ein Programm ist, das ein neuronales Netz verwendet, das den Betrieb der Zielvorrichtung (12) steuert, insbesondere
wobei jedes des Verarbeitungsmoduls und des Blocks eine Schicht und ein Block in einem Programm ist, das das neuronale Netz verwendet.

10. Informationsverarbeitungsvorrichtung (12, 101) nach einem der Ansprüche 1 bis 9,
wobei die Informationsverarbeitungsvorrichtung (12, 101) die Zielvorrichtung (12) ist, oder
wobei die Informationsverarbeitungsvorrichtung (12, 101) ein Cloud-Computer (101) ist.

11. Informationsverarbeitungsverfahren, umfassend:
Optimierungsverarbeitung zum Optimieren einer Prototypstruktur einer Multitasking-Struktur, die einen Betrieb einer Zielvorrichtung (12) steuert und eine Vielzahl von vorher vorhandenen Single-Tasking-Strukturen einschließt, auf einer Basis von Verarbeitungsmodulen der Single-Tasking-Strukturen durch Reduzieren mindestens eines von wiederholtem Verarbeiten und wiederholtem Lesen von Parametern der Verarbeitungsmodule zum Konstruieren der Multitasking-Struktur basierend auf einer Basis der Prototypstruktur zu optimieren,
wobei jede der Single-Tasking-Strukturen das Verarbeitungsmodul oder einen Block einschließlich einer Vielzahl der Verarbeitungsmodule einschließt, wobei das Verarbeitungsmodul eine Schicht eines neuronalen Netzes ist, und
die Optimierungsverarbeitung die Multitasking-Struktur unter Verwendung des Verarbeitungsmoduls oder des Blocks, das/der die Ähnlichkeit aufweist, unter den Single-Tasking-Strukturen optimiert;
wobei die Optimierungsverarbeitung die Multitasking-Struktur durch Verwenden des Verarbeitungsmoduls oder des Blocks mit Ähnlichkeit, die einen Ähnlichkeitsgrad angibt, der höher als ein vorbestimmter Schwellenwert ist, unter den Single-Tasking-Strukturen optimiert;
wobei die Optimierungsverarbeitung die Multitasking-Struktur durch Teilen des Verarbeitungsmoduls oder des Blocks mit der Eingangs- und Ausgangsähnlichkeit, die einen Ähnlichkeitsgrad von Eingangs- und Ausgangsdaten angibt, der hoch ist, unter den Single-Tasking-Strukturen optimiert, oder
wobei die Optimierungsverarbeitung die Multitasking-Struktur durch Teilen des Verarbeitungsmoduls oder des Blocks mit Parameterähnlichkeit, die einen Ähnlichkeitsgrad eines verwendeten Parameters angibt, der höher als ein vorbestimmter Wert ist, unter den Single-Tasking-Strukturen optimiert.

12. Programm, das die Informationsverarbeitungseinrichtung (12, 101) nach Anspruch 1 veranlasst, das Informationsverarbeitungsverfahren nach Anspruch 11 auszuführen.

## Revendications

1. Appareil de traitement d'informations (12, 101) comprenant
une unité d'optimisation (11) configurée pour optimiser une structure prototype d'une structure multitâche, qui commande le fonctionnement d'un dispositif cible (12) et comporte une pluralité de structures monotâches préexistantes, en fonction de modules de traitement des structures monotâches en réduisant au moins l'un parmi un traitement répété et une lecture répétée de paramètres des modules de traitement pour construire la structure multitâche en fonction de la structure prototype,
dans lequel chacune des structures monotâches comporte le module de traitement ou un bloc comportant une pluralité des modules de traitement, dans lequel le module de traitement est une couche d'un réseau neuronal, et
l'unité d'optimisation (11) est configurée pour optimiser la structure multitâche à l'aide du module de traitement ou du bloc qui a une similarité, parmi les structures monotâches ;
dans lequel l'unité d'optimisation (11) est configurée pour optimiser la structure multitâche à l'aide du module de traitement ou du bloc avec une similarité indiquant un degré de similarité étant plus élevé qu'un seuil prédéterminé, parmi les structures monotâches ;
dans lequel l'unité d'optimisation (11) est configurée pour optimiser la structure multitâche en partageant le module de traitement ou le bloc avec une similarité d'entrée et de sortie indiquant un degré de similarité de données d'entrée et de sortie étant élevé, parmi les structures monotâches, ou
dans lequel l'unité d'optimisation (11) est configurée pour optimiser la structure multitâche en partageant le module de traitement ou le bloc avec une similarité de paramètre indiquant un degré de similarité d'un paramètre utilisé étant plus élevé qu'une valeur prédéterminée, parmi les structures monotâches.

2. Appareil de traitement d'informations (12, 101) selon la revendication 1,
dans lequel l'unité d'optimisation (11) est configurée pour optimiser la structure multitâche en partageant le module de traitement ou le bloc avec une similarité indiquant un degré de similarité étant plus élevé qu'une valeur prédéterminée, parmi les structures monotâches.

3. Appareil de traitement d'informations (12, 101) selon la revendication 2,
dans lequel l'unité d'optimisation (11) est configurée pour optimiser la structure multitâche en couplant ou en découplant le module de traitement ou le bloc avec la similarité plus élevée que la valeur prédéterminée pour partager le module de traitement ou le bloc, parmi les structures monotâches,
dans lequel l'unité d'optimisation (11) est configurée pour optimiser la structure multitâche en couplant ou en découplant le module de traitement ou le bloc avec la similarité plus élevée que la valeur prédéterminée pour partager le module de traitement ou le bloc selon la performance et une fonction de matériel incluse dans le dispositif cible, parmi les structures monotâches.

4. Appareil de traitement d'informations (12, 101) selon la revendication 1,
dans lequel l'unité d'optimisation (11) est configurée pour optimiser la structure multitâche en partageant un paramètre utilisé dans le module de traitement ou le bloc avec une similarité indiquant un degré de similarité plus élevé qu'une valeur prédéterminée, parmi les structures monotâches.

5. Appareil de traitement d'informations (12, 101) selon l'une quelconque des revendications 1 à 4, comprenant en outre :
une unité de simulation (74) qui est configurée pour exécuter une simulation dans un cas où la structure multitâche optimisée par l'unité d'optimisation est mise en fonctionnement par le dispositif cible (12) ;
une unité de calcul de score (76) qui est configurée pour calculer un score indiquant une précision de traitement du traitement multitâche obtenue en fonction de la structure multitâche par la simulation ; et
une unité de réapprentissage (79) qui est configurée pour réapprendre la structure multitâche optimisée en fonction du score.

6. Appareil de traitement d'informations (12, 101) selon la revendication 5,
dans lequel l'unité de réapprentissage (79) est configurée pour mettre à jour au moins l'un parmi le paramètre du module de traitement et un bloc comportant une pluralité des modules de traitement inclus dans la structure multitâche optimisée par réapprentissage à l'aide de données d'apprentissage.

7. Appareil de traitement d'informations (12, 101) selon la revendication 6,
dans lequel les données d'apprentissage sont des données selon une performance et une fonction de capteurs et caméras fournis dans le dispositif cible (12).

8. Appareil de traitement d'informations (12, 101) selon la revendication 7,
dans lequel le module de traitement et le bloc exécutent un traitement prédéterminé en fonction d'au moins l'un parmi un résultat de captage fourni par les capteurs (J1), une image fournie par les caméras (J2, J3) et un résultat de traitement du module de traitement ou du bloc, et délivrent en sortie un résultat de traitement.

9. Appareil de traitement d'informations (12, 101) selon la revendication 8,
dans lequel la structure multitâche est un programme utilisant un réseau neuronal qui commande le fonctionnement du dispositif cible (12), en particulier
dans lequel chacun parmi le module de traitement et le bloc est une couche et un bloc dans un programme utilisant le réseau neuronal.

10. Appareil de traitement d'informations (12, 101) selon l'une quelconque des revendications 1 à 9,
dans lequel l'appareil de traitement d'informations (12, 101) est le dispositif cible (12), ou
dans lequel l'appareil de traitement d'informations (12, 101) est un ordinateur en nuage (101).

11. Procédé de traitement d'informations comprenant
un traitement d'optimisation consistant à optimiser une structure prototype d'une structure multitâche, qui commande le fonctionnement d'un dispositif cible (12) et comporte une pluralité de structures monotâches préexistantes, en fonction de modules de traitement des structures monotâches en réduisant au moins l'un parmi un traitement répété et une lecture répétée de paramètres des modules de traitement pour construire la structure multitâche en fonction de la structure prototype,
dans lequel chacune des structures monotâches comporte le module de traitement ou un bloc comportant une pluralité des modules de traitement, dans lequel le module de traitement est une couche d'un réseau neuronal, et
le traitement d'optimisation optimise la structure multitâche à l'aide du module de traitement ou du bloc qui a une similarité, parmi les structures monotâches ;
dans lequel le traitement d'optimisation optimise la structure multitâche à l'aide du module de traitement ou du bloc avec une similarité indiquant un degré de similarité étant plus élevé qu'un seuil prédéterminé, parmi les structures monotâches ;
dans lequel le traitement d'optimisation optimise la structure multitâche en partageant le module de traitement ou le bloc avec une similarité d'entrée et de sortie indiquant un degré de similarité de données d'entrée et de sortie étant élevé, parmi les structures monotâches, ou
dans lequel le traitement d'optimisation optimise la structure multitâche en partageant le module de traitement ou le bloc avec une similarité de paramètre indiquant un degré de similarité d'un paramètre utilisé étant plus élevé qu'une valeur prédéterminée, parmi les structures monotâches.

12. Programme qui amène l'appareil de traitement d'informations (12, 101) selon la revendication 1 à exécuter le procédé de traitement d'informations selon la revendication 11.
